(19) Europäisches Patentamt / European Patent Office / Office européen des brevets

(11) **EP 2 895 705 B1**

(12) **EUROPÄISCHE PATENTSCHRIFT**

(45) Veröffentlichungstag und Bekanntmachung des Hinweises auf die Patenterteilung:
**03.04.2019   Patentblatt 2019/14**

(21) Anmeldenummer: **13762454.0**

(22) Anmeldetag: **11.09.2013**

(51) Int Cl.:
*F01D 21/00* (2006.01)        *F02D 41/22* (2006.01)
*F01D 21/14* (2006.01)        *F02C 6/12* (2006.01)
*F02D 41/00* (2006.01)

(86) Internationale Anmeldenummer:
**PCT/EP2013/068789**

(87) Internationale Veröffentlichungsnummer:
**WO 2014/041013 (20.03.2014 Gazette 2014/12)**

(54) **VERFAHREN ZUR ÜBERWACHUNG ZUMINDEST EINES ABGASTURBOLADERS**

PROCESS FOR MONITORING OF AT LEAST ONE TURBOCHARGER

PROCÉDÉ DE MONITORAGE D'UN MOINS UN TURBOCOMPRESSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2012   AT 503892012**

(43) Veröffentlichungstag der Anmeldung:
**22.07.2015   Patentblatt 2015/30**

(73) Patentinhaber: **AVL List GmbH**
**8020 Graz (AT)**

(72) Erfinder:
• **PFISTER, Christoph**
  **8020 Graz (AT)**
• **MOHR, Hinrich**
  **21643 Beckdorf (DE)**

• **TEICHMANN, Rüdiger**
  **8075 Hart B. Graz (AT)**
• **STRASSER, Christian**
  **8010 Graz (AT)**
• **GUTSCHI, Wilhelm**
  **8502 Lannach (AT)**

(74) Vertreter: **Babeluk, Michael**
**Patentanwalt**
**Florianigasse 26/3**
**1080 Wien (AT)**

(56) Entgegenhaltungen:
**WO-A2-2008/090021        AT-A2- 502 913**
**DE-A1- 10 321 664        US-A1- 2002 100 278**
**US-A1- 2010 023 369**

**Beschreibung**

Die Erfindung betrifft ein Verfahren zur Überwachung zumindest eines Abgasturboladers einer Groß-Brennkraftmaschine, mit zumindest einem Verdichter und einem wellengleich angeordneten Abgasturbolader, wobei die aktuellen Drücke stromaufwärts und stromabwärts des Verdichters sowie die aktuellen Temperaturen stromaufwärts des Verdichters und stromaufwärts der Abgasturbine gemessen werden, wobei die aktuellen Drücke stromaufwärts und stromabwärts des Abgasturbine, die aktuelle Temperaturen stromabwärts des Verdichters und stromabwärts der Abgasturbine und die Drehzahl der Abgasturbine - vorzugsweise kontinuierlich - gemessen werden, und wobei aus den gemessen Daten die Wirkungsgrade des Verdichters und der Abgasturbine berechnet werden, wobei ein Diagnosealgorithmus mit einer Regressionsanalyse der Messwerte durchgeführt wird, und wobei dem Ergebnis der Regressionsanalyse der Messwerte einzelner Messgrößen jeweils ein Symptom zugeordnet wird.

Die Beschreibung eines Abgasturboladers und dessen aktueller Betriebspunkt werden üblicherweise über eine sogenannte Verdichterleistungskarte gegeben. Durch Messen des Druckverhältnisses am Verdichter, des Volumenstroms durch den Verdichter und der Abgasturboladerdrehzahl kann auf den aktuellen Betriebspunkt und (für Überwachungsanwendungen wichtig) auf den Wirkungsgrad geschlossen werden. Eine Messung des Druckverhältnisses zusammen mit dem Volumenstrom und/oder der Drehzahl ist beispielsweise bei der US 6 298 718 B1 oder der DE 10 2004 059 369 A1 vorgesehen. Zusammen mit der Leistungskarte kann damit eine Steuerung (wie in der US 6 298 718 B1) oder eine Überwachung (wie in der DE 10 2004 059 369 A1) der Verdichterseite realisiert werden, wobei man vor allem auf die Randbereiche, insbesondere auf Pumpgrenze und Abrisskennlinie, achtet.

Die US 2010/023369 A1 offenbart ein System zur Überwachung der Wirkungsgradcharakteristik einer über einen Turbolader aufgeladenen Brennkraftmaschine, wobei aus gemessenen Drücken und Temperaturen Wirkungsgrade berechnet werden. Mittels Regressionsanalysetechniken werden unter anderem Vorhersagemodelle für den Verdichterwirkungsgrad, den Turbinenwirkungsgrad und die Höhe von Vibrationen gebildet. Zur Vorhersage der Vibrationen wird aus ermittelten Schwingungsdaten des Abgasturboladers nach Durchführung einer Fouriertransformation ein Symptom einer Fehlfunktion des Abgasturboladers identifiziert. Analysen der transformierten Daten bei bestimmten Frequenzen weisen auf verschiedene mechanische Fehlfunktionen hin. Dabei wird einem Symptom jeweils ein bestimmter Fehler zugeordnet. Auf diese Weise können Fehler wie Lagerprobleme, Unwuchtigkeiten oder Wellenprobleme indiziert werden, die genau einem Symptom zugeordnet werden können.

Die DE 103 21 664 A1 beschreibt ein Diagnosesystem für turboaufgeladene Motoren, bei dem mit Hilfe einer Verdichterkarte und einer Turbinenkarte ein vorhergesagter Wert für einen Betriebsparameter und ein tatsächlicher Wert des Betriebsparameters bestimmt wird. Bei Auftreten einer definierten Abweichung zwischen dem vorhergesagten Wert und dem tatsächlichen Wert des Betriebsparameters wird ein Signal für abnormen Betrieb erzeugt.

Die US 2002/0100278 A1 offenbart ein Diagnosesystem für VGT-Abgasturbolader, wobei eine vordefinierte Diagnoseroutine in bestimmten Zeitabständen durch eine elektronische Regeleinheit ausgelöst wird.

Die WO 2008/090021 A2 und die AT 502 913 A2 beschreiben jeweils ein Verfahren zur Klassifizierung von Fehlern einer Brennkraftmaschine, wobei Messsignale über die Brennkraftmaschine oder Teilsysteme aufgezeichnet und aus der Abweichung zwischen den Messsignalen und Referenzwerten für die Messsignale-Berechnung Symptome berechnet werden und der Gesamtzustand der Brennkraftmaschine bestimmt und klassifiziert wird. Dabei wird jeweils eine Abweichung, aber keine Regressionsanalyse verwendet.

Aus der DE 10 2005 001 659 A1 ist ein Verfahren und ein System zur Bestimmung der Lebensdauer eines Abgasturboladers bekannt. Dabei wird der Arbeitszyklus des Abgasturboladers überwacht. Das bekannte Verfahren verwendet für die Messungen die Motordrehzahl, den Druck vor und nach Verdichter, sowie die Verdichtertemperatur beim Einlass und die Temperatur beim Turbineneingang. Die Turbinendrehzahl wird nicht direkt gemessen, sondern es wird über das Verhältnis des Einlassdruckes zum Auslassdruck des Verdichters auf die Turbinendrehzahl geschlossen. Eine effektive Überwachung der Turbinenseite ist damit aber nicht möglich.

In vielen Fällen stehen bei Grossmotoren Volumenstromdaten oder dergleichen nicht zur Verfügung, da der Volumenstrom weder auf der Verdichter- noch auf der Turbinenseite gemessen wird.

Aufgabe der Erfindung ist es, einen Abgasturbolader - nicht nur die Verdichterseite, sondern auch die Turbinenseite - effektiv und auf möglichst einfache Weise zu überwachen.

Erfindungsgemäß wird dies dadurch erreicht, dass der Diagnosealgorithmus bei festgestellter Verschlechterung des Wirkungsgrades des Verdichters und/oder der Abgasturbine oder nach Ablauf eines definierten Zeitintervalls gestartet wird, wobei beim Start des Diagnosealgorithmus alle Daten des zu untersuchenden Abgasturboladers, die während eines gewissen Zeitraumes aufgenommen wurden, aus einer Datenbank gelesen werden, wobei der Diagnosealgorithmus vorsieht, dass bei verschiedenen Motorlasten aufgenommene Messwerte der Messgrößen normalisiert werden und für die normalisierten Messwerte die Regressionsanalyse über der Zeit durchgeführt wird, und dass aus der Kombination mehrerer Symptome ein definierter Fehler bestimmt wird.

Vorzugsweise wird - nach Möglichkeit - jeder Messwert normalisiert. Besonders vorteilhaft ist es, wenn eine Gewichtung der Messwerte vorgenommen wird. Dabei können jüngere Messdaten höher gewichtet werden als ältere Messwerte.

Beim vorliegenden Verfahren wird die Verdichterleistungskarte für die Diagnose des Bauteils nicht miteinbezogen, weil bei Grossmotoren der Volumenstrom durch die Abgasturbine im allgemeinen nicht gemessen wird. Weiter kann es auch sein, dass die Verdichterleistungskarte nicht zur Verfügung steht. Die Verdichterleistungskarte kann aber eventuell für die Visualilisierung des Betriebspunktes eingesetzt werden.

Während bekannte Systeme sich auf die Überwachung der Verdichterseite beschränken, wird mit dem erfindungsgemäßen Verfahren auch die Turbinenseite überwacht. Deshalb werden auch Druck und Temperatursensoren auf der Turbinenseite angebracht. Zusätzlich können - um den Betriebspunkt des Motors mit zu erfassen - auch Zylinderdrucksensoren vorgesehen sein. Dabei können auch Sensoren von sowieso vorgesehenen Motor-Überwachungs-Systemen mitverwendet werden. Das vorliegende Verfahren kann somit bestehende Motor-Überwachungssysteme hinsichtlich der - bisher nicht durchgeführten - Überwachung der Abgasturbine ergänzen. Durch die Installation von Sensoren auf der Turbinenseite kann nun auch die Abgasturbine direkt überwacht werden. Dies kann insbesondere für Grossmotoren besonders nützlich sein, um Verschmutzungen frühzeitig zu erkennen und die Reinigung der Abgasturbine zu planen und zu optimieren.

Besonders vorteilhaft ist es, wenn zumindest ein Ausprägungsgrad des Fehlers aus der Kombination mehrerer Symptome berechnet wird.

Das erfindungsgemäße Verfahren ist in der Lage, aus Messdaten:

- für einen oder mehrere Fehler eines Abgasturboladers oder eines seiner Teilsysteme das Vorliegen dieses Fehlers zu diagnostizieren

- für die oben genannten Fehler einen Schweregrad oder Ausprägungsgrad zu bestimmen

- aus mehreren möglichen Fehlern und gegebenenfalls deren Schweregrad einen Gesamtzustand des Abgasturboladers und/oder eines seiner Teilsysteme (z.B. Verdichter, Abgasturbine, etc.) zu bestimmen

- auch bei Fehlen und/oder Unplausibilität eines oder mehrerer Messsignale noch Aussagen über zumindest einige mögliche Fehler machen zu können.

Hierbei ist das erfindungsgemäße Verfahren so flexibel, dass:

- sowohl eine Erweiterung auf neue Fehler und/oder neue Messsignale als auch eine Verbindung zwischen empirischem Expertenwissen und funktionellen Kenntnissen möglich ist;

- trotz der gegenseitigen Beeinflussung der Fehler eine Isolation und Bewertung einzelner Fehler möglich ist.

Vorzugsweise ist dabei vorgesehen, dass der Gesamtzustand des Abgasturboladers und/oder seiner Teilsysteme aus den Fehlern und deren Ausprägungsgraden bestimmt und klassifiziert wird.

Eine einfache Fehlererkennung ist möglich, wenn jeder Fehler anhand einer Fehler-Symptom-Routine - beispielsweise ein Flussdiagramm - identifiziert wird, wobei die Fehler-Symptom-Routine für jedes aus den Abweichungen gewonnene Symptom und für jeden Fehler, auf den der Abgasturbolader und/oder seine Teilsysteme untersucht wird, den Zusammenhang zwischen Symptom und Fehler enthält.

In weiterer Ausführung der Erfindung ist vorgesehen, dass für jeden Fehler und für jedes für diesen Fehler relevante Symptom eine Fehlerteilwahrscheinlichkeitsfunktion FW definiert wird, mit welcher abhängig von der Größe des Symptoms eine Wahrscheinlichkeit berechnet wird, mit welcher das Symptom zum Fehler beiträgt, wobei vorzugsweise die Fehler anhand der Fehlerwahrscheinlichkeit $W_i$, berechnet als die Summe aller Fehlerteilwahrscheinlichkeiten $W_{ik}$ normiert auf die Summe aller Maxima $A_{ik}$ der Fehlerteilwahrscheinlichkeitsfunktionen:

$$W_i = \frac{\sum_{k=1}^{n} W_{ik}}{\sum_{k=1}^{n} A_{ik}} \qquad (1)$$

detektiert werden. Eine einfache Ausführung der Erfindung sieht vor, dass die Fehlerteilwahrscheinlichkeitsfunktion FW eine einfache Rampe oder Sigmoidfunktion ist, die vom Wert Null zu der Amplitude $A_{ij}$ im bestimmten Bereich der Symptomgröße linear ansteigt.

Eine besonders detaillierte Fehlerdiagnose lässt sich erreichen, wenn zumindest zwei unterschiedliche Ausprägungsgrade zumindest eines Fehlers erkannt werden können.

Um eine Verfälschung des Messergebnisses zu vermeiden, ist vorgesehen, dass jene Symptome, die aufgrund von nicht vorhandenen und/oder unplausiblen Messwerten nicht berechnet werden können, bei der Erkennung von Fehlern verworfen werden, und dass ein Fehler als nicht erkennbar klassifiziert wird, wenn das Gewicht aller nicht berechenbarer Symptome größer als ein definierter Schwellenwert wird, wobei vorzugsweise das Gewicht $P_i$ aller nicht berechneter Symptome als die Summe der Maxima $A_{ik}$ aller entsprechenden Fehlerteilwahrscheinlichkeitsfunktionen FW normiert auf die Summe aller Maxima $A_{ik}$ :

$$P_i = \frac{\sum\limits_{k=alle\ (np)-Daten} A_{ik}}{\sum\limits_{k=1}^{n} A_{ik}} \tag{3}$$

berechnet wird. Darüber hinaus ist es vorteilhaft, wenn eine Größe $G_z$, die den Gesamtzustand jedes einzelnen Teilsystems des Abgasturboladers abbildet durch die Formel

$$G_z = \min\left\{ 1; \frac{\sum\limits_{i=1}^{m} K_i \cdot H(W_{iz})}{\max(K_i)} \right\} \tag{4}$$

berechnet wird, wobei $K_i$ ein Wichtungsfaktor ist, der die Wichtigkeit des Fehlers "i" für Zustand des Teilsystems "z" widerspiegelt, die Größe $W_{iz}$ die gesamte Wahrscheinlichkeit des ersten Ausprägungsgrades des Fehlers "i" im Teilsystem "z", und die Funktion H(x) eine Filterfunktion ist, die sicherstellt, dass der Fehler erst dann berücksichtigt wird wenn er als "wahrscheinlich" eingestuft wurde, und dass der Zustand des Teilsystems als "fehlerhaft" definiert wird, wenn die Größe $G_z$ größer als ein definierter Schwellenwert $G_s$ ist.

Der Gesamtzustand des Abgasturboladers lässt sich aus dem Zustand seiner Teilsysteme ermitteln. Um die Aussagekraft des Verfahrens weiter zu steigern, ist es besonders vorteilhaft, wenn ein Gesamtzustand des Abgasturboladers und/ oder seiner Teilsysteme als nicht bewertbar klassifiziert wird, wenn das Gewicht der nicht erkennbaren Fehler größer als ein Schwellenwert ist.

Die Erfindung wird im Folgenden anhand der Fig. näher erläutert. Es zeigen schematisch:

Fig. 1     zeigt den prinzipiellen Messaufbau zur Durchführung des erfindungsgemäßen Verfahrens;

Fig. 2     den Ablauf der Fehlererkennung eines Fehlers (abnehmende Verdichterleistung) anhand eines Beispieles;

Fig. 3     ein Beispiel für eine Fehlerteilwahrscheinlichkeitsfunktion FW;

Fig. 4     einen Ablaufplan für die Klassifikation eines einzelnen Fehlers für den zwei Ausprägungsgraden berechnet werden;

Fig. 5     ein Beispiel für einen Ablaufplan für die Klassifikation des Gesamtzustandes der Brennkraftmaschine oder eines Teilsystems;

Fig. 6     ein Beispiel für Filterfunktion, die bei Berechnung des Gesamtzustandes der einzelnen Teilsysteme des Abgasturboladers benutzt wird;

Fig. 7     einen Ablaufplan für die Klassifikation des Gesamtzustandes des Abgasturboladers.

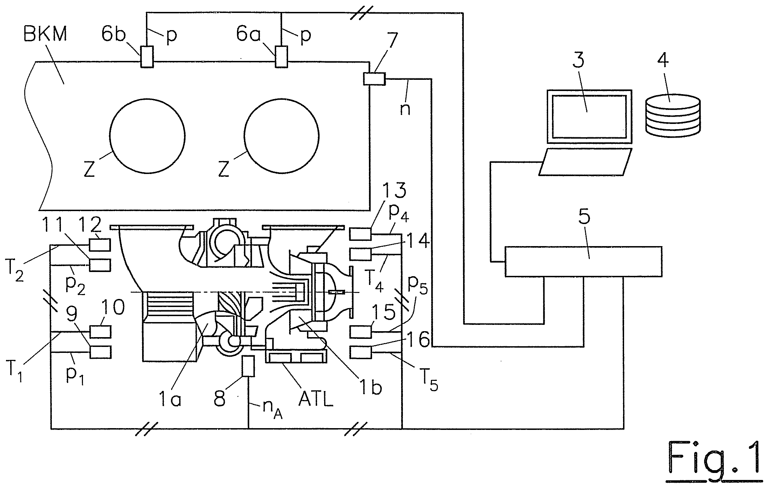

Messaufbau (Fig. 1)

Der Messaufbau zur Durchführung des erfindungsgemäßen Verfahrens zur Überwachung eines Abgasturboladers ATL einer Groß-Brennkraftmaschine BKM ist schematisch in Fig. 1 dargestellt. Für die Überwachung wird ein Überwachungscomputer 3, eine Datenbank 4, eine Messhardware 5 und eine Reihe an Messwertaufnehmern (Sensoren) 6a, 6b, 7 bis 16 benötigt. Im Einzelnen werden Druckaufnehmer 6a, 6b, 9, 11, 13 und 15; Temperatursensoren 10, 12, 14, 16; sowie Drehzahlgeber 7, 8 eingestzt.

Für die Überwachung des Abgasturboladers ATL werden folgende Größen gemessen:

- Druck $p_1$, $p_2$; $p_4$, $p_5$ und Temperatur $T_1$, $T_2$, $T_4$, $T_5$ vor und nach dem Verdichter 1a sowie vor und nach der Abgasturbine 1b über die Sensoren 9 bis 16. Der Druck $p_2$ und die Temperatur $T_2$ wird stromaufwärts eines Ladeluftkühlers gemessen.

- Abgasturboladerdrehzahl $n_A$ über Drehzahlaufnehmer 8

- Motordrehzahl n über Kurbelwinkelsensor 7

- Zylinderdruck p an zumindest zwei Zylindern Z über Druckaufnehmer 6a, 6b

Die gemessenen Daten werden über eine Messhardware 5 zum Überwachungscomputer 3 gesendet, wo sie entsprechend verarbeitet und angezeigt werden können.

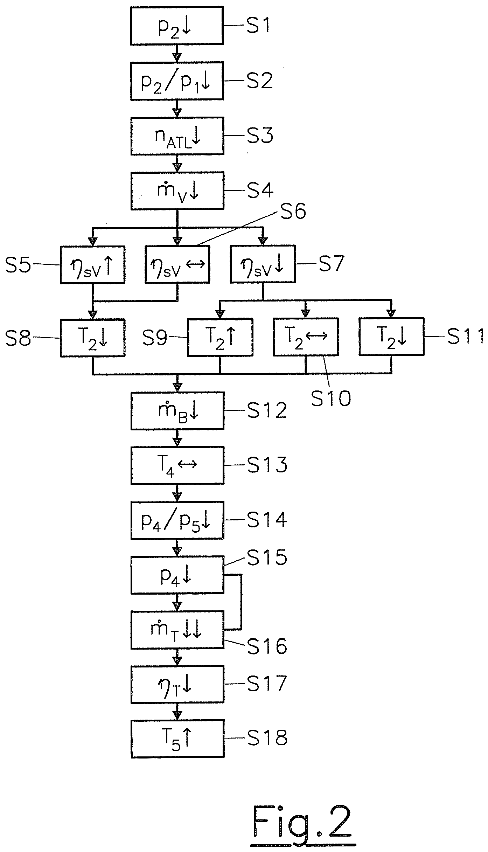

Diagnosealgorithmus (Fig. 2)

Gemäß dem vorliegenden Verfahren werden bei Aufruf des Diagnosealgorithmus die Messdaten früherer Messungen aus der Datenbank 4 ausgelesen. Zusammen mit einer aktuellen Messung wird bestimmt, wie sich die gemessenen Grössen über die Zeit verändern. Durch bestimmte Kombination dieser Veränderungen kann dann auf verschiedene Fehler hingewiesen werden, die wiederum Auskunft über den Zustand des Abgasturboladers ATL geben.

Im Detail werden die Drücke $p_1$, $p_2$; $p_4$, $p_5$ und Temperaturen $T_1$, $T_2$, $T_4$, $T_5$ und Drehzahlen n, $n_A$ kontinuierlich gemessen und über die Messhardware 5 zu einem Überwachungscomputer 3 gesandt. Auf dem Überwachungscomputer 3 können diese dann gleich angezeigt werden. Weiter kann aus den gemessenen Daten der Wirkungsgrad des Verdichters 1a, der Abgasturbine 1b und des Abgasturboladers ATL berechnet werden. Dieser gibt einen ersten Indikator über dessen Zustand, dient im Weiteren aber nur als Eingangsgrösse und wird nicht für eine direkte Aussage über Fehler verwendet.

Der Diagnosealgorithmus selber kann nach verschiedenen Kriterien gestartet werden, zum Beispiel nach Ablauf eines bestimmten Zeitintervalls oder auch wenn der Wirkungsgrad von Verdichter 1a oder Abgasturbine 1b sich zu verschlechtern scheint.

Beim Start des Diagnosealgorithmus werden die Messdaten aufgezeichnet. Die Brennkraftmaschine BKM sollte sich dabei in einen stationären Betriebszustand befinden, damit von den gemessenen Werten über die Zeit ein Mittelwert berechnet werden kann. All diese Mittelwerte werden dann zusammen mit einem Zeitstempel in die Datenbank 4 geschrieben. Somit besteht ein Eintrag in die Datenbank 4 aus den Mittelwerten der gemessenen Drücke $p_1$, $p_2$; $p_4$, $p_5$, Temperaturen $T_1$, $T_2$, $T_4$, $T_5$ und Drehzahlen n, $n_A$, sowie weiteren charakteristischen Grössen und Daten zur Identifikation des Abgasturboladers ATL (mehrere Abgasturbolader können gleichzeitig überwacht werden).

Eine erste Besonderheit des vorliegenden Verfahrens ist die Art der Analyse dieser Daten über die Zeit. Der Diagnosealgorithmus liest alle Daten des zu untersuchenden Abgasturboladers ATL, die während eines gewissen Zeitintervalls aufgenommen wurden (zum Beispiel über einen Monat), aus der Datenbank 4. Da die verschiedenen Messwerte bei verschiedenen Motorlasten (und somit auch an verschiedenen Betriebspunkten des Abgasturboladers ATL) aufgenommen wurden, werden sie zuerst 'normalisiert'. Zum Beispiel kann das Verhältnis des Auslassdrucks $p_2$ zum Einlassdruck $p_1$ des Verdichters 1a als Funktion der Abgasturboladerdrehzahl $n_A$ dargestellt werden. Somit können die Messdaten für den Auslassdruck $p_2$ des Verdichters 1a von der Abgasturboladerdrehzahl $n_A$ unabhängig gemacht, also durch diese Funktion normalisiert werden. Dies erlaubt dann weiter eine Regressionsanalyse dieser Messdaten über der Zeit. Hier können noch weitere Modifikationen gemacht werden. Zum Beispiel können aktuellere Messdaten höher gewichtet werden, als solche, deren Aufzeichnung schon länger zurück liegt. Das Resultat der Regressionsanalyse wird als Symptom bezeichnet und entspricht der Entwicklung der entsprechenden Messgrösse über der Zeit.

Der Kern des Diagnosealgorithmus ist die Kombination von verschiedenen Symptomen zur Berechnung von definierten Fehlern. Fig. 2 zeigt ein typisches Vorgehen zur Erkennung eines Fehlers, wobei als Beispiel ein verminderter Auslassdruck $p_2$ des Verdichters 1a festgestellt wird. Dieser Abfall im Auslassdruck $p_2$ kann verschiedene Ursachen haben. Er kann entweder durch den Verdichter 1a selbst bedingt sein oder durch eine Leckage nach dem Verdichter 1a verursacht werden. Jedes der Kästchen des Blockdiagramms in Fig. 2 stellt ein potentielles Symptom S1, S2, S3,...Sn dar. Diese Symptome S1, S2, S3,...Sn werden nun entsprechend dem Blockdiagramm kombiniert, um eine Wahrscheinlichkeit für den Fehler zu erhalten. Dabei wird eine Methodik zur Berechnung der Fehlerwahrscheinlichkeit, sowie deren Klassifikation und weiter die Bestimmung der Zustände von Subsystemen und letztlich des Zustandes gesamten Abgasturboladers ATL verwendet, welche im Detail in der AT 502 913 B1 beschrieben ist.

Erläuterung zu Fig. 2:

In dem in Fig. 2 dargestellten Beispiel werden die Parameter eingangseitiger Druck $p_1$ des Verdichters 1a, ausgangseitiger Druck $p_5$ der Abgasturbine 1b eingangseitige Temperatur $T_1$ des Verdichters 1a, Temperatur $T_3$ nach Ladeluftkühler, Motordrehzahl n, Kraftstoff-Luftverhältnis $\lambda_{Motor}$ der Brennkraftmaschine BKM, Geometrie des Abgasturboladers ATL und eingangseitige Temperatur $T_4$ der Abgasturbine 1b als konstant angenommen. Weiters wird angenommen, dass nur geringe Änderungen auftreten, so dass die jeweiligen Dichten als konstant betrachtet werden können.

S1: Das Sinken des ausgangsseitigen Druckes $p_2$ des Verdichters 1a könnte auf abnehmende Verdichterleistung oder auf Leckage in der Ladeluftleitung zurückgeführt weren.

S2: $p_2/p_1$ sinkt, weil der eingangseitige Druck $p_1$ des Verdichters 1a konstant bleibt.

S3: Der Abgasturboladerwirkungsgrad $\eta_{ATL}$ sinkt, da die Verdichterleistung abnimmt.

S4: Der Verdichtermassenstrom $m_V$ nimmt aufgrund geringerer Verdichterdrehzahl bzw. Abgasturboladerdrehzahl $n_A$ ab.

S5, S6, S7: Der Isentropenwirkungsgrad des Verdichters $\eta_{sV}$ kann - abhängig von der Lage des vorherigen Betriebspunktes im Verdichterkennfeld - zunehmen, gleichbleiben oder abnehmen.

S8, S9, S10, S11: die ausgangsseitige Temperatur $T_2$ des Verdichters 1a kann - abhängig von $T_1$, $p_2/p_1$ und $\eta_{sV}$ - annehmen, gleichbleiben, oder zunehmen.

S12: Massenstrom $m_B$ durch Brennkraftmaschine nimmt ab, da Kraftstoff- Luftverhältnis $\lambda_{Motor}$ konstant.

S13: Die Abgastemperatur $T_4$ bleibt konstant, da das Kraftstoff- Luftverhältnis $\lambda_{Motor}$ und die Motordrehzahl n konstant bleibt.

S14: Das Druckverhältnis $p_4/p_5$ zwischen Eingangs- und Ausgangsseite der Abgasturbine 1b wird geringer, wegen geringerem Verdichterdruckverhältnis $p_2/p_1$ (Leistungsbilanz)

S15: Der Druck $p_4$ stromaufwärts der Abgasturbine 1b nimmt ab, weil der Druck $p_5$ stromabwärts der Abgasturbine 1b konstant bleibt.

S16: Der Turbinenmassenstrom $m_T$ nimmt ab, da Turbinenschlucklinie abnimmt.

S17: In Abhängigkeit des Turbinenmassenstromes $m_T$, $T_4$, $p_4$, $p_4/p_5$, und des Abgasturboladerwirkungagrades $\eta_{ATL}$ nimmt der Turbinenwirkungsgrad $\eta_T$ ab.

S18: In Abhängigkeit der Temperatur $T_4$ stromaufwärts der Abgasturbine 1b, des Turbinendruckverhältnisses $p_4/p_5$, und des Turbinenwirkungsgrades $\eta_T$ steigt die Temperatur $T_5$.stromabwärts der Abgasturbine 1b.

Bei dem erfindungsgemäßen Verfahren werden zunächst, basierend auf Expertenwissen, experimentellen und theoretischen Untersuchungen und Simulationen mathematischer Modelle, die Merkmale (z.B. Messsignale) identifiziert, die besonders stark auf die festzustellenden Fehler reagieren. Die Symptome S1, S2, S3,...Sn, d.h. die fehlerbedingten Abweichungen dieser Merkmale von zugehörigen Referenzwerten, bilden die Grundlage für die nachfolgende Fehlerdiagnose. Dabei sind die Referenzwerte entweder Nominalwerte, welche an einem nicht fehlerhaften Abgasturbolader gemessen wurden, oder Modellwerte aus mathematischen Simulationen des normalen Prozesses.
In einer ersten, besonders einfachen Ausführungsform des Verfahrens werden die Fehler F1, F2, F3,...Fm anhand einer Fehler-Symptom-Routine, beispielsweise entsprechender Flussdiagramme, identifiziert, für die in Fig. 2 ein Beispiel gezeigt ist. Diese Tabelle enthält für jedes aus den Merkmalen gewonnene Symptom S1, S2, S3,...Sn für den entsprechenden Fehler des Abgasturboladers 1, den Zusammenhang zwischen Symptom und Fehler.

Für jeden vom erfindungsgemäßen Verfahren erkennbaren Fehler F1, F2, F3,...Fm wird nun berechnet, ob die Symptome S1, S2, S3,...Sn den Bedingungen der Fehler-Symptom-Routine (Flussdiagramm) entsprechen. Entsprechen alle oder zumindest ein großer Teil der Symptome diesen Bedingungen, erkennt das Verfahren den Fehler als vorhanden. Für das Beispiel aus Fig. 2 bedeutet dies anschaulich: Wenn der Betrag vom Symptom S1 (Verdichterdruck p2) negativ abweicht, Symptom S2 (p2/p2) ebenfalls negativ ist und auch die anderen Symptome entsprechend den angegebenen Pfeilen abweichen, wird der Fehler F1 erkannt, unabhängig vom Wert von weiteren Symptomen, die nicht im Flussdiagramm aufgeführt sind.

Eine vorteilhafte Weiterbildung dieses Verfahrens bestimmt zumindest für einige Fehler mehr als einen Ausprägungsgrad. So kann zum Beispiel ein erster Ausprägungsrad eines Fehlers als Zustand "fehlerhaft" oder "gelb" und ein zweiter Ausprägungsrad des gleichen Fehlers als Zustand "kritisch" oder "rot" bestimmt werden. Besonders vorteilhaft ist es dabei, wenn für den zweiten Ausprägungsgrad der Fehler die Schwellwerte größer sind als für den ersten Ausprägungsgrad der Fehler. So wird der zweite Ausprägungsgrad eines Fehlers bei größeren Abweichungen zwischen Merkmal und Referenzwert erreicht als der erste Ausprägungsgrad.

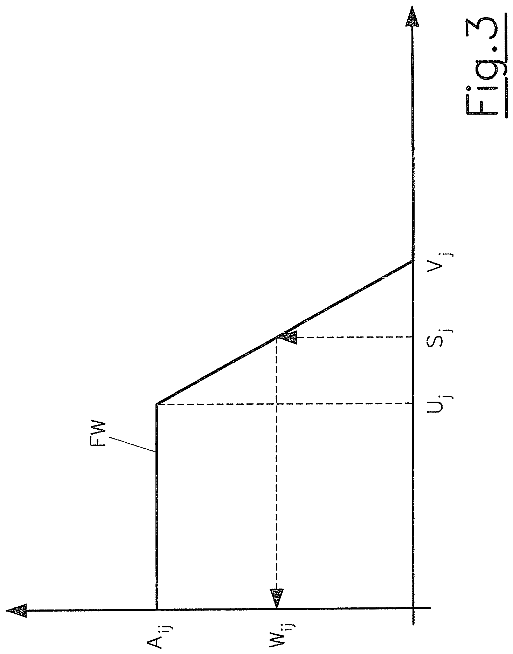

In einer zweiten Ausführungsform des erfindungsgemäßen Verfahrens wird statt eines einfachen aber starren Flussdiagramms aus den Symptomen eine Wahrscheinlichkeit für einen Fehler berechnet. Hierzu wird für jeden Fehler, dessen Nummer mit dem Index i bezeichnet sei und für jedes für diesen Fehler relevante Symptom, dessen Index mit j bezeichnet sei, eine Fehlerteilwahrscheinlichkeitsfunktion FW definiert. Mit dieser Fehlerteilwahrscheinlichkeitsfunktion FW, für die ein Beispiel in Fig. 3 gezeigt ist, wird für jeden Fehler i abhängig von der Größe des Symptoms $S_j$ eine Wahrscheinlichkeit $W_{ij}$ berechnet, mit welcher das Symptom $S_j$ zum Fehler i beiträgt. Hierdurch wird dem Umstand Rechnung getragen, dass ein Fehler auch dann auftreten kann, wenn mehrere Merkmale jeweils eine mittelgroße Abweichung von ihren jeweiligen Referenzwerten haben. Mit dieser Maßnahme wird die Empfindlichkeit der Diagnoseergebnisse gegenüber Messungenauigkeiten und Rauschen reduziert.

Der Wert der Fehlerteilwahrscheinlichkeitsfunktion FW ist dabei stets größer oder gleich Null, das Maximum dieser Funktion sei mit $A_{ij}$ benannt. Die Amplitude $A_{ij}$ entspricht der Wichtigkeit des Symptoms $S_j$ für die Erkennung des Fehlers "i". Je eindeutiger der Zusammenhang zwischen dem Fehler "i" und dem Symptom "j" ist, desto größer ist die Amplitude $A_{ij}$ in Vergleich zu anderen Amplituden $A_{ik}$, (k=1..n). Die Größe $A_{ij}$ wird auf Basis des Expertenwissens und/oder Simulation des Prozessmodels festgelegt.

In einer besonders vorteilhaften Ausführung, welche in Fig. 3 dargestellt ist, ist die Fehlerteilwahrscheinlichkeitsfunktion FW eine einfache Rampe oder Sigmoidfunktion, die vom Wert Null zu der Amplitude $A_{ij}$ im Bereich der Symptomgröße von $V_j$ bis $U_j$ linear ansteigt.

In einem zweiten Schritt wird dann die gesamte Wahrscheinlichkeit $W_i$ des Fehlers "i" berechnet, indem die Fehlerteilwahrscheinlichkeiten für alle Symptome $W_{ik}$ (k=1..n), normiert auf die Summe aller Amplituden $A_{ik}$, summiert werden:

$$W_i = \frac{\sum\limits_{k=1}^{n} W_{ik}}{\sum\limits_{k=1}^{n} A_{ik}} \qquad (1)$$

Wenn einige der erforderlichen Messdaten nicht vorhanden oder nicht plausibel sind, so dass es nicht möglich ist, ein Symptom $S_k$ zu ermitteln, werden für alle Fehler "i" die Wahrscheinlichkeiten $W_{ik}$ in Summe (1) auf Null gesetzt.

Auch in dieser zweiten Ausführungsform des erfindungsgemäßen Verfahrens besteht eine vorteilhafte Weiterbildung darin, unterschiedliche Ausprägungsgrade der Fehler zu berücksichtigen. Hierbei werden dann für jeden Ausprägungsgrad der Fehler, zum Beispiel einen ersten Ausprägungsgrad "gelb" und einen zweiten Ausprägungsgrad "rot", getrennte Fehlerteilwahrscheinlichkeitsfunktionen definiert. Entsprechend dem oben eingeführten Wert $W_{ij}$ sei dabei der Wert der zweiten Fehlerteilwahrscheinlichkeitsfunktion für den zweiten Ausprägungsgrad der Fehler mit $E_{ij}$ bezeichnet. Das Maximum der zweiten Fehlerteilwahrscheinlichkeitsfunktion $E_{ij}$ sei mit $B_{ij}$ bezeichnet. Besonders vorteilhaft ist es dabei, wenn bei gleicher Größe des Symptoms $S_j$ der Wert der zweiten Fehlerteilwahrscheinlichkeitsfunktion $E_{ij}$ stets kleiner oder gleich dem Wert der ersten Fehlerteilwahrscheinlichkeitsfunktion $W_{ij}$ ist. Somit wird der zweite Ausprägungsgrad des Fehlers bei größeren Abweichungen zwischen Merkmal und Referenzwert erkannt als der erste Ausprägungsgrad.

Analog wird wieder die gesamte Wahrscheinlichkeit $E_i$ des zweiten Ausprägungsgrades des Fehlers "i" als Summe von allen $E_{ik}$ (k=1..n), normiert auf die Summe aller Amplituden $B_{ik}$ der zweiten Fehlerteilwahrscheinlichkeits-

funktionen, berechnet:

$$E_i = \frac{\sum_{k=1}^{n} E_{ik}}{\sum_{k=1}^{n} B_{ik}} \qquad (2)$$

Genau wie bei den ersten Fehlerwahrscheinlichkeiten werden die Größen $E_{ik}$ in Summe (2) auf Null gesetzt wenn einige Symptome $S_k$ wegen nicht vorhanden oder nicht plausiblen Messdaten nicht zu bestimmen sind.

Für den Fachmann ist es leicht zu erkennen, dass mit dem oben beschriebenen Schema noch weitere Ausprägungsgrade der Fehler berechnet werden können.

Eine weitere vorteilhafte Weiterentwicklung des erfindungsgemäßen Verfahrens klassifiziert die einzelnen erkennbaren Fehler nun nach einer oder mehreren Fehlerklassen. Besonders einfach kann hier vorgegangen werden, wenn ein Fehler i dann als vorhanden klassifiziert wird, wenn seine Wahrscheinlichkeit $W_i$ größer als ein Schwellwert $W_s$ ist.

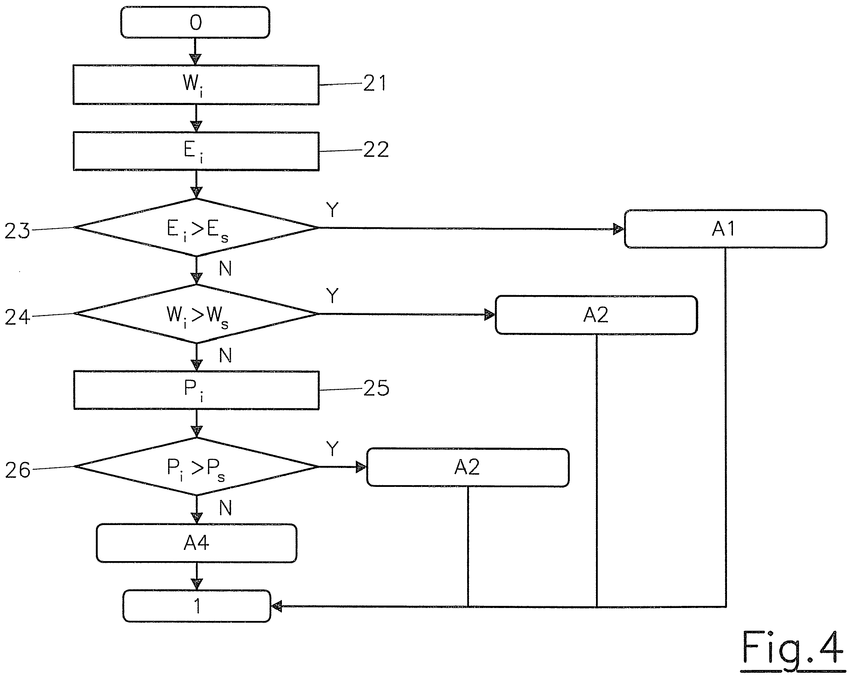

Noch vorteilhafter ist es jedoch, bei mehreren Ausprägungsgraden die Fehler nach mehreren Klassen zu klassifizieren. Fig. 4 stellt beispielhaft dar, wie ein Fehler, der in zwei Ausprägungsgraden vorhanden sein kann, in 4 Klassen A1, A2, A3, A4 eingeordnet wird. Diese 4 Klassen können z.B. sein: A1-"gefährlich" bzw. "rot", A2-"wahrscheinlich" bzw. "gelb", A3-"nicht erkennbar" bzw. "grau" und A4-"unwahrscheinlich" bzw. "grün".

Der Klassifikationsprozess beginnt (Beginn bei "0") mit der Berechnung der Wahrscheinlichkeit $W_i$ für den ersten Ausprägungsgrad des Fehlers (Schritt 21) und der Berechnung der Wahrscheinlichkeit $E_i$ für den zweiten Ausprägungsgrad des Fehlers, (Schritt 22). Danach wird in Schritt 23 die Wahrscheinlichkeit $E_i$ für den zweiten Ausprägungsgrad des Fehlers, mit einem zweiten Schwellenwert $E_s$ (beispielsweise $E_s = 0{,}9$) verglichen. Liegt $E_i$ höher als $E_s$(Y), so wird der Fehler "i" als "gefährlich" eingestuft (A1). Wenn das nicht der Fall ist, dann wird in Schritt 24 geprüft, ob die Wahrscheinlichkeit $W_i$ für den ersten Ausprägungsgrad des Fehlers größer ist als ein erster Schwellenwert $W_s$ (zum Beispiel $W_s = 0{,}7$). Wenn $W_i > W_s$ ist, dann wird der Fehler "i" als "wahrscheinlich" klassifiziert (A2). Andernfalls, wird beurteilt, ob der Wert von $W_i$ möglicherweise aufgrund von fehlenden oder nicht plausiblen Messdaten (bezeichnet als 'np'-Daten) klein ist. Dafür wird in Schritt 25 das Gewicht $P_i$ aller nicht berechneter Symptome als die normierte Summe aller entsprechenden Amplituden $A_{ik}$ bestimmt:

$$P_i = \frac{\sum_{k=alle\ (np)-Daten} A_{ik}}{\sum_{k=1}^{n} A_{ik}} \qquad (3)$$

Wenn der Wert von $P_i$ größer ist als ein vordefinierter Schwellenwert $P_s$ (zum Beispiel $P_s = 0{,}6$), bedeutet das, dass der Fehler "i" anhand von vorhandenen Messdaten weder erkannt noch ausgeschlossen werden kann. In diesem Fall wird der Fehler "i" als "nicht erkennbar" (A3) klassifiziert (Schritt 26 in Fig. 4). Wenn keine der vorherigen Überprüfungen in den Schritten 23 bis 26 ein positives Ergebnis hat, wird der Fehler als "unwahrscheinlich" (A4) klassifiziert. Mit "1" ist das Ende des ersten Prozesses bezeichnet.

Für den Fachmann ist leicht erkennbar, wie das oben beschriebene Verfahren auf noch weitere Ausprägungsgrade von Fehlern und/oder weitere Klassen ausgedehnt werden kann.

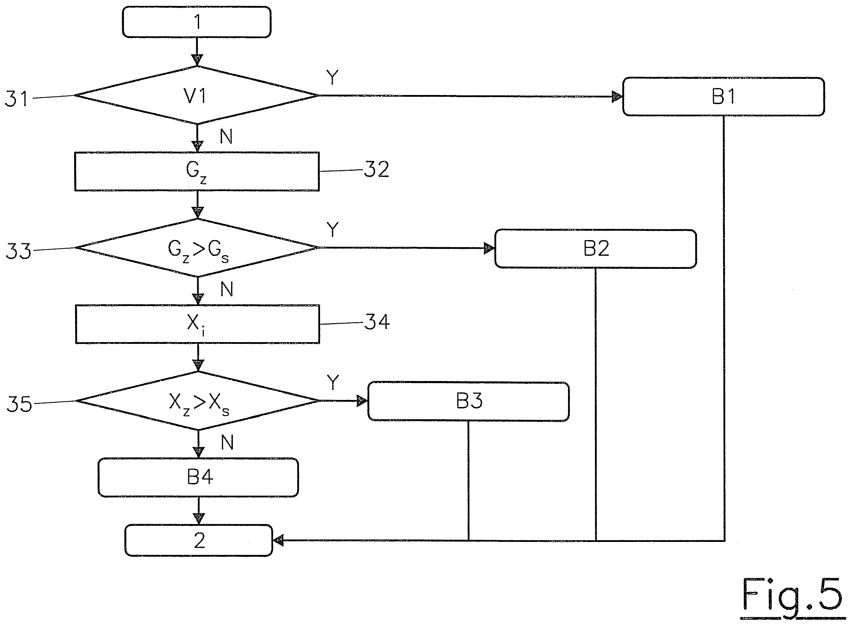

Der letzte Schritt des erfindungsgemäßen Verfahrens berechnet aus einzelnen Fehlern, die in einer oder mehrenden Ausprägungsgraden und/oder Klassen auftreten können, einen Gesamtzustand des Abgasturboladers ATL. Für den besonders relevanten Fall, dass die einzelnen Fehler nach den Klassen "gefährlich" (A1), "wahrscheinlich" (A2), "nicht erkennbar" (A3) und "unwahrscheinlich" (A4) klassifiziert wurden, stellt Fig. 5 den Ablaufplan für die Klassifikation des Abgasturboladers ATL oder eines Teilsystems dar. Solch ein Teilsystem kann der Verdichter oder die Abgasturbine sein. In der folgenden Erklärung wird nur auf ein Teilsystem "z" des Abgasturboladers ATL Bezug genommen, wobei das Teilsystem aber auch der gesamte Abgasturbolader ATL sein kann.

In einem ersten Schritt (31) wird in Abfrage V1 überprüft, ob zumindest einer der Fehler des Teilsystems als "gefährlich" (A1) klassifiziert wurde. In diesem Fall (Y) wird das gesamte Teilsystem als "kritisch" (B1) klassifiziert. Ist das Ergebnis dieser Prüfung negativ (N), wird in einem zweiten Schritt (32) eine Größe $G_z$ berechnet, die den Gesamtzustand des Teilsystems "z" abbildet:

$$G_z = \min\left\{1; \frac{\sum\limits_{i=1}^{m} K_i \cdot H(W_{i_z})}{\max(K_i)}\right\} \qquad (4)$$

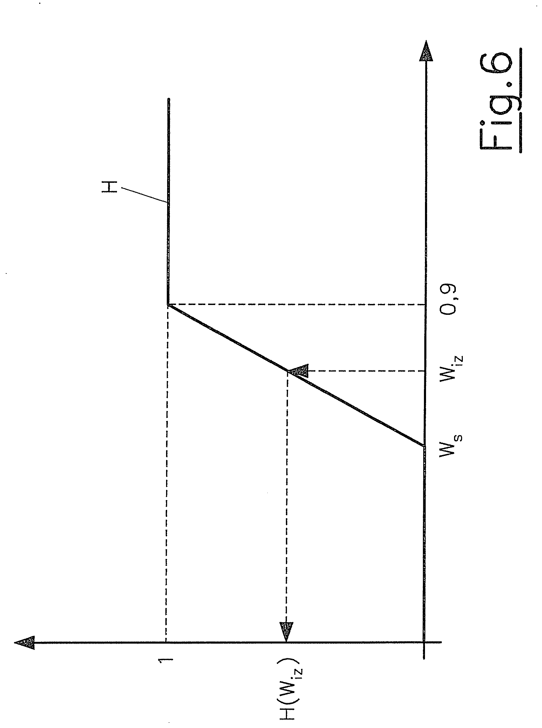

Dabei ist $K_i$ ein Wichtungsfaktor, der die Wichtigkeit des Fehlers "i" für den Zustand des Teilsystems "z" widerspiegelt. Die Größe von $K_i$ wird anhand von Expertenwissen und/oder Simulation des Prozessmodels festgelegt. Die Größe $W_{iz}$ ist die gesamte Wahrscheinlichkeit $W_i$ des ersten Ausprägungsgrades des Fehlers "i" im Teilsystem "z". Die Funktion H(x) ist eine Filterfunktion, die sicherstellt, dass der Fehler erst dann berücksichtigt wird, wenn er als "wahrscheinlich" eingestuft wurde (d.h. erst wenn $W_i > W_s$), und dass der Fehler erst dann voll berücksichtigt wird wenn die Fehlerwahrscheinlichkeit groß genug ist (z.B. $W_i > 0,9$). Ein Beispiel für eine Filterfunktion H ist in Fig. 6 gezeigt. Wenn der Fehler "I" als "nicht erkennbar" bewertet wurde, dann wird er nicht in $G_z$ einberechnet: $H(W_{Iz}) = 0$.

In Schritt 33 in Fig. 5 wird die Größe $G_z$ mit einem vordefiniertem Schwellenwert $G_s$ (beispielsweise $G_s = 0,7$) verglichen. Liegt $G_z$ höher als $G_s$, so wird der Zustand des Teilsystems "z" als "fehlerhaft" (B2) definiert. Wenn das nicht der Fall ist, dann wird beurteilt, ob der Wert von $G_z$ aufgrund von eventuell vorhandenen nicht erkennbaren Fehlern klein ist. Dafür wird das Gewicht $X_i$ von nicht erkennbaren ('ne') Fehlern in Schritt 34 als die normierte Summe aller entsprechenden Gewichte $K_i$ berechnet:

$$X_z = \frac{\sum\limits_{i=alle\,(ne)-Fehler} K_i}{\sum\limits_{i=1}^{m} K_i} \qquad (5)$$

Wenn der Wert von $X_z$ größer als der vordefinierte Schwellenwert $X_s$ (zum Beispiel $X_s = 0,3$) ist, wird der Gesamtzustand des Teilsystems "z" als "nicht bewertbar" (B3) klassifiziert (Schritt 35 in Fig. 5). Sonst wird der Gesamtzustand des Teilsystems "z" als "gesund" (B4) klassifiziert. Mit "2" ist das Ende der Routine bezeichnet.

Der Fachmann wird hier leicht erkennen, wie das Verfahren der Klassifikation eines Teilsystems auch auf Fälle mit weiteren Ausprägungsgraden der Fehler und/ oder weiteren Fehlerklassen ausgedehnt werden kann.

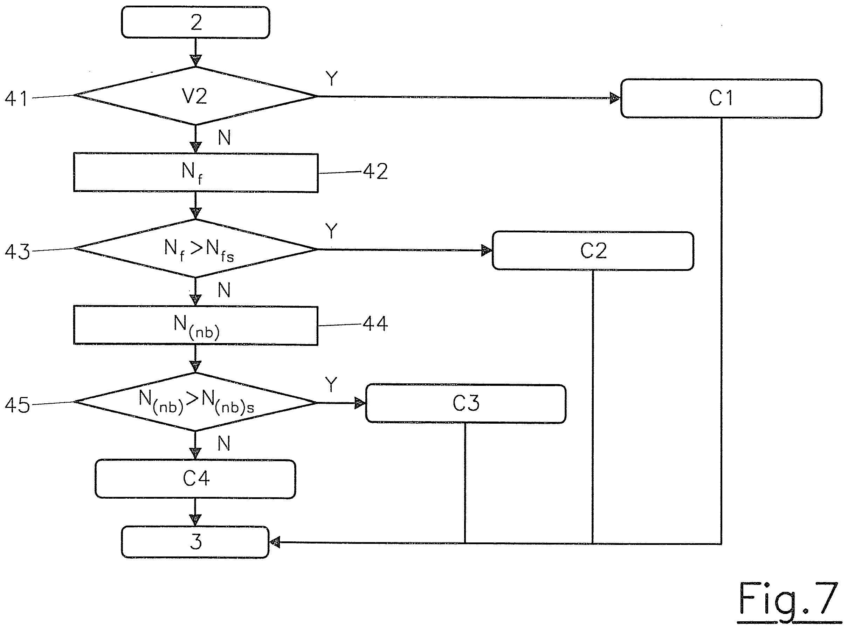

In einer letzten vorteilhaften Ausgestaltung des erfindungsgemäßen Verfahrens wird aus dem Zustand der Teilsysteme des Abgasturboladers ATL der Zustand des gesamten Abgasturboladers ATL berechnet. Ein Beispiel für einen Ablaufplan dieser Berechnung ist in Fig. 7 gezeigt.

Wenn zumindest eines der Teilsysteme als "kritisch" (B1) klassifiziert wurde, wird der Gesamtzustand des Abgasturboladers 1 in der Abfrage V2 auch als "kritisch" (C1) klassifiziert (Schritt 41 in Fig. 7). Sonst wird in Schritt 42 das Gewicht $N_f$ der fehlerhaften Teilsysteme ('f'-Teilsysteme) mit Hilfe der Wichtungsfaktoren $D_k$ berechnet, welche die Wichtigkeit des Zustandes jedes einzelnen Teilsystems "k" auf den Gesamtzustand des Abgasturboladers ATL darstellen:

$$N_f = \frac{\sum\limits_{k=alle\,(f)-Teilsysteme} D_k}{\sum\limits_{k=alle\,Teilsysteme} D_k} \qquad (6)$$

In Schritt 43 wird geprüft ob das Gewicht der Teilsysteme mit Bewertung "fehlerhaft" $N_f$ größer als der vordefinierte Schwellenwert $N_{fs}$ (zum Beispiel $N_{fs} = 0,3$) ist. In diesem Fall wird auch der Gesamtzustand des Abgasturboladers ATL als "fehlerhaft" (A10) festgesetzt. Andernfalls, wird in Schritt 44 das Gewicht $N_{(nb)}$ der nicht-bewertbaren Teilsysteme berechnet:

$$N_{(nb)} = \frac{\sum_{k=alle\ (nb)-Teilsysteme} D_k}{\sum_{k=alle\ Teilsysteme} D_k} \qquad (7)$$

In Schritt 45 wird überprüft, ob das Gewicht der Teilsysteme mit Bewertung "nicht bewertbar" $N_{(nb)}$ größer als ein Schwellenwert $N_{(nb)s}$ (zum Beispiel $N_{(nb)s}$ = 0,3) ist. Ist dies der Fall, wird auch der Gesamtzustand des Abgasturboladers ATL als "nicht bewertbar" (C3) bewertet. Sonst wird der Gesamtzustand des Abgasturboladers als "gesund" (C4) klassifiziert. Mit "3" ist das Ende des Verfahrensprozesses bezeichnet.

Für den Fachmann ist hier leicht erkennbar, wie das Verfahren der Klassifikation des Zustandes des gesamten Abgasturboladers ATL auch auf Fälle mit weiteren Fehlerklassen ausgedehnt werden kann.

## Patentansprüche

1.　Verfahren zur Überwachung zumindest eines Abgasturboladers (ATL) einer Groß-Brennkraftmaschine (BKM), mit zumindest einem Verdichter (1a) und einer wellengleich angeordneten Abgasturbine (1b), wobei folgende Messgrößen - vorzugsweise kontinuierlich - gemessen werden: die aktuellen Drücke ($p_1$, $p_2$) stromaufwärts und stromabwärts des Verdichters (1a) sowie die aktuellen Temperaturen ($T_1$, $T_4$) stromaufwärts des Verdichters (1a) und stromaufwärts der Abgasturbine (1b), die aktuellen Drücke ($p_4$, $p_5$) stromaufwärts und stromabwärts der Abgasturbine (1b), die aktuellen Temperaturen ($T_2$, $T_5$) stromabwärts des Verdichters (1a) und stromabwärts der Abgasturbine (1b) und die Drehzahl (nA) der Abgasturbine (1b); und wobei aus den gemessen Daten die Wirkungsgrade ($\eta_V$) des Verdichters (1a) und der Abgasturbine (1b) berechnet werden, wobei ein, Diagnosealgorithmus bei festgestellter Verschlechterung des Wirkungsgrades ($\eta_{TV}$, $\eta_T$) des Verdichters (1a) und/oder der Abgasturbine (1b) oder nach Ablauf eines definierten Zeitintervalls gestartet wird, wobei beim Start des Diagnosealgorithmus alle Daten des zu untersuchenden Abgasturboladers (ATL), die während eines gewissen Zeitraumes aufgenommen wurden, aus einer Datenbank (4) gelesen werden, **dadurch gekennzeichnet, dass** der Diagnosealgorithmus vorsieht, dass bei verschiedenen Motorlasten aufgenommene Messwerte der Messgrößen normalisiert werden und für die normalisierten Messwerte eine Regressionsanalyse über der Zeit durchgeführt wird, wobei dem Ergebnis der Regressionsanalyse der Messwerte einzelner Messgrößen jeweils ein Symptom zugeordnet wird, und dass aus der Kombination mehrerer Symptome ein definierter Fehler bestimmt wird.

2.　Verfahren nach Anspruch 1, **dadurch gekennzeichnet, dass** eine Gewichtung der Messwerte vorgenommen wird, wobei vorzugsweise jüngere Messwerte höher gewichtet werden als ältere Messwerte.

3.　Verfahren nach Anspruch 1 oder 2, **dadurch gekennzeichnet, dass** das Symptom für einen Fehler aus der Abweichung zwischen einem aus dem Messsignal gewonnenen Merkmal und einem Referenzwert für dieses Merkmal gewonnen wird.

4.　Verfahren nach einem der Ansprüche 1 bis 3, **dadurch gekennzeichnet, dass** aus der Kombination mehrerer Symptome verschiedener Messwerte ein Ausprägungsgrad eines definierten Fehlers bestimmt wird.

5.　Verfahren nach Anspruch 4, **dadurch gekennzeichnet, dass** der Gesamtzustand des Abgasturboladers (ATL) und/oder seiner Teilsysteme aus den Fehlern und deren Ausprägungsgraden bestimmt und klassifiziert wird.

6.　Verfahren nach Anspruch 4 oder 5, **dadurch gekennzeichnet, dass** jeder Fehler anhand einer Fehler-Symptom-Routine, vorzugsweise eines auf der Basis der Fehler-Symptom-Routine erstellten Flussdiagramms, beschrieben wird, wobei die Fehler-Symptom-Routine für jedes aus den Abweichungen gewonnene Symptom und für jeden Fehler den Zusammenhang zwischen Symptom und Fehler enthält.

7.　Verfahren nach einem der Ansprüche 4 bis 6, **dadurch gekennzeichnet, dass** für jeden Fehler und für jedes für diesen Fehler relevante Symptom eine Fehlerteilwahrscheinlichkeitsfunktion FW definiert wird, mit welcher abhängig von der Größe des Symptoms eine Wahrscheinlichkeit berechnet wird, mit welcher das Symptom zum Fehler beiträgt.

8.　Verfahren nach Anspruch 7, **dadurch gekennzeichnet, dass** die Fehler anhand der Fehlerwahrscheinlichkeit $W_i$, berechnet als die Summe aller Fehlerteilwahrscheinlichkeiten $W_{ik}$ normiert auf die Summe aller Maxima $A_{ik}$ der

Fehlerteilwahrscheinlichkeitsfunktionen:

$$W_i = \frac{\sum_{k=1}^{n} W_{ik}}{\sum_{k=1}^{n} A_{ik}} \qquad (1)$$

detektiert werden.

9.  Verfahren nach Anspruch 7 oder 8, **dadurch gekennzeichnet, dass** die Fehlerteilwahrscheinlichkeitsfunktion FW eine einfache Rampe oder Sigmoidfunktion ist, die vom Wert Null zu der Amplitude $A_{ij}$ im bestimmten Bereich der Symptomgröße linear ansteigt.

10. Verfahren nach einem der Ansprüche 4 bis 9, **dadurch gekennzeichnet, dass** zumindest zwei unterschiedliche Ausprägungsgrade zumindest eines Fehlers erkannt werden können.

11. Verfahren nach einem der Ansprüche 1 bis 10, **dadurch gekennzeichnet, dass** jene Symptome, die aufgrund von nicht vorhandenen und/oder unplausiblen Messwerten nicht berechnet werden können, bei der Erkennung von Fehlern verworfen werden, und dass ein Fehler als nicht erkennbar klassifiziert wird, wenn das Gewicht aller nicht berechenbarer Symptome größer als ein definierter Schwellenwert wird.

12. Verfahren nach Anspruch 11, **dadurch gekennzeichnet, dass** das Gewicht $P_i$ aller nicht berechneter Symptome als die Summe der Maxima $A_{ik}$ aller entsprechenden Fehlerteilwahrscheinlichkeitsfunktionen FW normiert auf die Summe aller Maxima $A_{ik}$ :

$$P_i = \frac{\sum_{k=alle\,(np)-Daten} A_{ik}}{\sum_{k=1}^{n} A_{ik}} \qquad (3)$$

berechnet wird.

13. Verfahren nach einem der Ansprüche 4 bis 12, **dadurch gekennzeichnet, dass** eine Größe $G_z$, die den Gesamtzustand jedes einzelnen Teilsystems des Abgasturboladers abbildet, durch die Formel

$$G_z = \min\left\{ 1;\, \frac{\sum_{i=1}^{m} K_i \cdot H(W_{iz})}{\max(K_i)} \right\} \qquad (4)$$

berechnet wird, wobei $K_i$ ein Wichtungsfaktor ist, der die Wichtigkeit des Fehlers "i" für einen Zustand des Teilsystems "z" widerspiegelt, die Größe $W_{iz}$ die gesamte Wahrscheinlichkeit des ersten Ausprägungsgrades des Fehlers "i" im Teilsystem "z", und die Funktion H(x) eine Filterfunktion ist, die sicherstellt, dass der Fehler erst dann berücksichtigt wird, wenn er als "wahrscheinlich" eingestuft wurde, und dass der Zustand des Teilsystems als "fehlerhaft" definiert wird, wenn die Größe $G_z$ größer als ein definierter Schwellenwert $G_s$ ist.

14. Verfahren nach Anspruch 13, **dadurch gekennzeichnet, dass** ein Gesamtzustand des Abgasturboladers (ATL) und/oder seiner Teilsysteme als nicht bewertbar klassifiziert wird, wenn das Gewicht der nicht erkennbaren Fehler größer als ein Schwellenwert ist.

**15.** Verfahren nach Anspruch 13, **dadurch gekennzeichnet, dass** der Gesamtzustand des Abgasturboladers (ATL) aus dem Zustand seiner Teilsysteme berechnet wird.

**Claims**

**1.** A method for monitoring at least one exhaust gas turbocharger (ATL) of a large internal combustion engine (BKM), comprising at least one compressor (1a) and one exhaust gas turbocharger (1b) arranged on the same shaft, wherein the following measured quantities are measured, preferably continuously: the current pressures ($p_1$, $p_2$) upstream and downstream of the compressor (1a) and the current temperatures ($T_1$, $T_4$) upstream of the compressor (1a) and upstream of the exhaust gas turbine (1b), the current pressures ($p_4$, $p_5$) upstream and downstream of the exhaust gas turbocharger (1b), the current temperatures ($T_2$, $T_5$) downstream of the compressor (1a) and downstream of the exhaust gas turbine (1b), and the rotational speed (nA) of the exhaust gas turbine (1b), and wherein the efficiencies ($\eta_V$) of the compressor (1a) and the exhaust gas turbine (1b) are calculated from the measured data, wherein a diagnostic algorithm is started when a decrease in the efficiency ($\eta_{TV}$, $\eta_T$) of the compressor (1a) and/or the exhaust gas turbine (1b) is detected or after expiration of a defined time interval, wherein during the start of the diagnostic algorithm all data of the exhaust gas turbocharger (ATL) which were recorded during a specific period are read from a database (4), **characterised in that** the diagnostic algorithm provides that measured values of the measured quantities recorded under different engine loads are normalised and a regression analysis over time is carried out for the normalised measured values, wherein one respective symptom is assigned to the result of the regression analysis of the measured values of individual measured quantities, and that a defined error is determined from the combination of several symptoms.

**2.** A method according to claim 1, **characterised in that** a weighting of the measured values is carried out, wherein preferably younger measured values are weighted more highly than older measured values.

**3.** A method according to claim 1 or 2, **characterised in that** the symptom for an error is obtained from the deviation between a feature gained from a measuring signal and a reference value for said feature.

**4.** A method according to one of the claims 1 to 3, **characterised in that** a manifestation level of a defined error is determined from the combination of several symptoms of different measured values.

**5.** A method according to claim 4, **characterised in that** the total state of the exhaust gas turbocharger (ATL) and/or its subsystems is determined and/or classified from the errors and their manifestation levels.

**6.** A method according to claim 4 or 5, **characterised in that** each error is described on the basis of an error-symptom routine, preferably a flowchart prepared on the basis of the error-symptom routine, wherein the error-symptom routine contains the context between the symptom and error for each symptom obtained from the deviations and for each error.

**7.** A method according to one of the claims 4 to 6, **characterised in that** a partial error probability function FW is defined for each error and for each symptom relevant for said error, with which, depending on the magnitude of the symptom, a probability is calculated with which the symptom contributes to the error.

**8.** A method according to claim 7, **characterised in that** the errors are detected on the basis of the error probability $W_i$, calculated as the sum total of all partial error probabilities $W_{ik}$ normalised to the sum total of all maximums $A_{ik}$ of the partial error probability functions:

$$W_i = \frac{\sum\limits_{k=1}^{n} W_{ik}}{\sum\limits_{k=1}^{n} A_{ik}} \tag{1}$$

**9.** A method according to claim 7 or 8, **characterised in that** the partial error probability function FW is a simple ramp or sigmoid function which linearly rises from the value zero to the amplitude $A_{ij}$ in the determined range of the symptom magnitude.

10. A method according to one of the claims 4 to 9, **characterised in that** at least two different manifestation levels of at least one error can be recognised.

11. A method according to one of the claims 1 to 10, **characterised in that** such symptoms that cannot be calculated as a result of inexistent and/or implausible measured values are rejected in the recognition of errors, and that an error is classified as non-recognisable if the weight of all non-calculable symptoms becomes greater than a defined threshold value.

12. A method according to claim 11, **characterised in that** the weight $P_i$ of all non-calculated symptoms is calculated as the sum total of the maximums $A_{ik}$ of all respective partial error probability functions FW normalised to the sum total of all maximums $A_{ik}$ :

$$P_i = \frac{\displaystyle\sum_{k=all\ (np)-data} A_{ik}}{\displaystyle\sum_{k=1}^{n} A_{ik}} \qquad (3)$$

13. A method according to one of the claims 4 to 12, **characterised in that** a quantity $G_z$, which illustrates the total state of every single subsystem of the exhaust gas turbocharger, is calculated by the formula

$$G_z = \min\left\{ 1; \frac{\displaystyle\sum_{i=1}^{m} K_i \cdot H(W_{iz})}{\max(K_i)} \right\} \qquad (4),$$

wherein $K_i$ is a weighting factor which represents the relevance of the error "i" for a state of the subsystem "z", the quantity $W_{iz}$ the entire probability of the first manifestation level of the error "i" in the subsystem "z", and the function $H(x)$ is a filter function which ensures that the error will only be considered when it is rated as "probable", and the state of the subsystem is defined as "faulty" when the quantity $G_z$ is greater than a defined threshold value $G_s$.

14. A method according to claim 13, **characterised in that** a total state of the exhaust gas turbocharger (ATL) and/or its subsystems is classified as non-rateable if the weight of the non-recognisable errors is greater than a threshold value.

15. A method according to claim 13, **characterised in that** the total state of the exhaust gas turbocharger (ATL) is calculated from the state of its subsystems.

## Revendications

1. Procédé permettant de surveiller au moins un turbocompresseur à gaz d'échappement (ATL) d'un moteur à combustion interne de grande dimension (BKM) ayant au moins un compresseur (1a) et une turbine à gaz d'échappement (1b) montés sur un même arbre, selon lequel les grandeurs de mesure suivantes sont mesurées, de préférence en continu : les pressions actuelles ($p_1$, $p_2$) en amont et en aval du compresseur (1a) ainsi que les températures actuelles ($T_1$, $T_4$) en amont du compresseur (1a) et en aval de la turbine à gaz d'échappement (1b), les pressions actuelles ($p_4$, $p_5$) en amont et en amont de la turbine à gaz d'échappement (1b), les températures actuelles ($T_2$, $T_5$) en aval du compresseur (1a) et en aval de la turbine à gaz d'échappement (1b) et la vitesse de rotation ($n_A$) de la turbine à gaz d'échappement (1b), et, à partir des données mesurées, les rendements ($\eta_V$) du compresseur (1a) et de la turbine de gaz d'échappement (1b) sont calculés, un algorithme de diagnostic étant démarré en cas de constatation d'une détérioration du rendement ($\eta_{Tv}, \eta_T$) du compresseur (1a) et/ou de la turbine à gaz d'échappement (1b) ou après écoulement d'un intervalle de temps défini, au début de l'algorithme de diagnostic toutes les données du turbocompresseur à gaz d'échappement (ATL) devant être analysé qui ont été obtenues pendant un intervalle de temps donné étant prélevées dans une banque de données (4),

**caractérisé en ce que**

l'algorithme de diagnostic prévoit que, les grandeurs de mesure sont normalisées pour des valeurs de mesure obtenues pour différentes charges du moteur et pour les valeurs de mesure normalisées on effectue une analyse de régression dans le temps, un symptôme étant respectivement associé au résultat de l'analyse de régression des valeurs de mesure de grandeurs de mesure individuelles, et un défaut défini étant déterminé à partir de la combinaison de plusieurs symptômes.

2. Procédé conforme à la revendication 1,
   **caractérisé en ce qu'**
   on effectue une pondération des valeurs de mesure, et de préférence des valeurs de mesure plus récentes sont pondérées plus fortement que des valeurs de mesure plus anciennes.

3. Procédé conforme à la revendication 1 ou 2,
   **caractérisé en ce que**
   le symptôme d'un défaut est obtenu à partir de l'écart entre une caractéristique obtenue à partir du signal de mesure et une valeur de référence de cette caractéristique.

4. Procédé conforme à l'une des revendications 1 à 3,
   **caractérisé en ce qu'**
   on détermine le degré d'intensité d'un défaut défini à partir de la combinaison de plusieurs symptômes de différentes valeurs de mesure.

5. Procédé conforme à la revendication 4,
   **caractérisé en ce que**
   l'état global du turbocompresseur à gaz d'échappement (ATL) et/ou de ses systèmes partiels est déterminé et classé à partir des défauts et de leurs degrés d'intensité.

6. Procédé conforme à la revendication 4 ou 5,
   **caractérisé en ce que**
   chaque défaut est décrit à partir d'une routine défaut-symptôme, de préférence un diagramme de flux obtenu sur la base de la routine défaut-symptôme, la routine défaut-symptôme pour chaque symptôme obtenu à partir des écarts et pour chaque défaut renfermant la relation entre le symptôme et le défaut.

7. Procédé conforme à l'une des revendications 4 à 6,
   **caractérisé en ce que**
   pour chaque défaut et pour chaque symptôme important pour ce défaut on définit une fonction de probabilité partielle de défaut FW avec laquelle on calcule en fonction de la grandeur du symptôme la probabilité avec laquelle le symptôme contribue au défaut.

8. Procédé conforme à la revendication 7,
   **caractérisé en ce que**
   les défauts sont détectés sur le fondement de la probabilité de défaut W calculée en tant que somme de toutes les probabilités partielles de défaut $W_{ik}$ normalisées sur la somme de tous les maxima $A_{ik}$ des fonctions de probabilités partielles de défaut :

$$W_i = \frac{\sum\limits_{k=1}^{n} W_{ik}}{\sum\limits^{n} A_{ik}} \qquad (1)$$

9. Procédé conforme à la revendication 7 ou 8,
   **caractérisé en ce que**

la fonction de probabilité partielle de défaut FW est une simple rampe ou une fonction sigmoïde qui croit linéairement de la valeur zéro à l'amplitude $A_{ij}$ dans des zones définies de la grandeur de symptôme.

10. Procédé conforme à l'une des revendications 4 à 9,
**caractérisé en ce qu'**
au moins deux degrés d'intensité différents d'au moins un défaut peuvent être identifiés.

11. Procédé conforme à l'une des revendications 1 à 10,
**caractérisé en ce que**
tous les symptômes qui ne peuvent pas être calculés en raison de valeurs de mesure absentes et/ou non plausibles sont rejetés lors de l'identification de défauts, et un défaut est classé comme non identifiable lorsque le poids de tous les symptômes ne pouvant pas être calculés est supérieur à une valeur de seuil définie.

12. Procédé conforme à la revendication 11,
**caractérisé en ce que**
le poids $P_i$ de tous les symptômes non calculés est calculé en tant que la somme des maxima $A_{ik}$ de toutes les fonctions de probabilité partielle de défaut FW correspondantes normalisées sur la somme de tous les maxima $A_{ik}$ :

$$P_i = \frac{\sum\limits_{k=alle\ (np)-Daten} A_{ik}}{\sum\limits_{k=1}^{n} A_{ik}} \qquad (3)$$

13. Procédé conforme à l'une des revendications 4 à 12,
**caractérisé en ce qu'**
une grandeur $G_z$ qui représente l'état global de tous les systèmes partiels individuels du turbo réacteur à gaz d'échappement est calculée par la formule :

$$G_z = \min\left\{ 1; \frac{\sum\limits_{i=1}^{m} K_i \cdot H(W_{iz})}{\max(K_i)} \right\} \qquad (4)$$

dans laquelle $K_i$ représente un facteur de pondération qui réfléchit l'importance du défaut "i" pour un état du système partiel "z", la grandeur $W_{iz}$ représente la probabilité globale du premier degré d'intensité du défaut "i" dans le système partiel "z" et la fonction H(x) est une fonction de filtrage qui garantit que le défaut ne soit pris en considération que lorsqu'il a été classé comme probable, et l'état du système partiel étant défini comme défectueux lorsque la grandeur $G_z$ est supérieure à une valeur de seuil $G_s$ définie.

14. Procédé conforme à la revendication 13,
**caractérisé en ce que**
l'état global du turbocompresseur à gaz d'échappement (ATL) et/ou de ses systèmes partiels est classé comme non évaluable lorsque le poids du défaut non identifiable est supérieur à une valeur de seuil.

15. Procédé conforme à la revendication 13,
**caractérisé en ce que**
l'état global du turbocompresseur à gaz d'échappement (ATL) est calculé à partir de l'état de ses systèmes partiels.

Fig.1

$$p_2\downarrow \quad \text{—S1}$$

$$p_2/p_1\downarrow \quad \text{—S2}$$

$$n_{ATL}\downarrow \quad \text{—S3}$$

$$\dot{m}_V\downarrow \quad \text{—S4}$$

S6

$$S5\text{—}\eta_{sV}\uparrow \quad \eta_{sV}\leftrightarrow \quad \eta_{sV}\downarrow\text{—S7}$$

$$S8\text{—}T_2\downarrow \quad S9\text{—}T_2\uparrow \quad T_2\leftrightarrow \quad T_2\downarrow\text{—S11}$$

S10

$$\dot{m}_B\downarrow \quad \text{—S12}$$

$$T_4\leftrightarrow \quad \text{—S13}$$

$$p_4/p_5\downarrow \quad \text{—S14}$$

$$p_4\downarrow \quad \text{—S15}$$

$$\dot{m}_T\downarrow\downarrow \quad \text{—S16}$$

$$\eta_T\downarrow \quad \text{—S17}$$

$$T_5\uparrow \quad \text{—S18}$$

## Fig.2

Fig.3

Fig.4

Fig.5

Fig.6

Fig.7

**IN DER BESCHREIBUNG AUFGEFÜHRTE DOKUMENTE**

**In der Beschreibung aufgeführte Patentdokumente**

- US 6298718 B1
- DE 102004059369 A1
- US 2010023369 A1
- DE 10321664 A1
- US 20020100278 A1
- WO 2008090021 A2
- AT 502913 A2
- DE 102005001659 A1
- AT 502913 B1